# EUROPEAN PATENT APPLICATION

(11) **EP 4 593 216 A2**
(43) Date of publication of application: **30.07.2025**
(21) Application number: 25181589.0
(22) Date of filing: 11.08.2022
(51) Int. Cl.: H01R 13/71

(54) **VEHICLE CONTROLLER, VEHICLE, POWER SUPPLY METHOD, AND COMPUTER PROGRAM**

(30) Priority: 16.08.2021 JP 2021132280
(62) Divisional of application: 22190060.8
(71) Applicant: TOYOTA JIDOSHA KABUSHIKI KAISHA, Toyota-shi, Aichi-ken 471-8571 (JP)
(72) Inventor: KINOMURA, Shigeki, TOYOTA-SHI, AICHI-KEN, 471-8571 (JP); ANTO, Toru, TOYOTA-SHI, AICHI-KEN, 471-8571 (JP)
(74) Representative: Cabinet Beau de Loménie

(57) **Abstract**

A vehicle (1) includes: an on-board inverter (16) that adjusts the voltage of an electric power; and a vehicle inlet (17). The vehicle inlet (17) has a CS terminal through which a proximity detection signal for identifying the connection state between a discharge connector (2) and the vehicle inlet (17) is transmitted. An electronic control unit (ECU) (19) includes a processor (191) that selects the voltage of an electric power output from the on-board inverter (16). When the proximity detection signal is in a first bound, the processor (191) selects AC 100V, and when the proximity detection signal is in a second bound at least partially different from the first bound, the processor (191) selects AC 200V higher than AC 100V.

## Description

This nonprovisional application is based on Japanese Patent Application No. 2021-132280 filed on August 16, 2021 with the Japan Patent Office, to which the person in the art can refer to when considering the present disclosure.

### BACKGROUND

### Field

The present disclosure relates to a vehicle controller, a vehicle, a power supply method, and a computer program.

### Description of the Background Art

Vehicles are known which are capable of supplying electric power externally. Supplying of electric power from a vehicle to an indoor facility is also called V2H (Vehicle to Home). Supplying of electric power from a vehicle to an electronic device is also called V2L (Vehicle to Load). Various techniques related to V2H and V2L are proposed. For example, Japanese Patent No. 5123419 discloses a connector for connecting a vehicle and an electronic device which receives power supply from the vehicle.

### SUMMARY

In order to use various indoor facilities or electronic devices, etc., there is a demand for supply of electric power that has a voltage appropriate to the working voltage of an indoor facility or the operating voltage of an electronic device. In particular, desirably, the electric power having an appropriate voltage can be supplied in an as simple configuration as possible.

The present disclosure is made in view of the problem above, and an object of the present disclosure is to enable supply of an electric power having an appropriate voltage, in a simple configuration.
(1) A vehicle controller according to a certain aspect of the present disclosure controls a vehicle capable of externally discharging an electric power via a discharge connector. The vehicle includes: a power converter that adjusts a voltage of an electric power; and a connector which, as the discharge connector is connected to the connector, discharges to the discharge connector an electric power output from the power converter. The connector has an identifying terminal. The vehicle controller includes a processor that selects a voltage of the electric power output from the power converter. The processor: selects a first voltage when a voltage on the identifying terminal is in a first bound; and selects a second voltage different from the first voltage when the voltage on the identifying terminal is in a second bound different from the first bound.
(2) The identifying terminal has a voltage level that changes in accordance with a connection state between the discharge connector and the connector.
(3) The discharge connector includes a discharge start switch for receiving a user operation to begin a discharge of the electric power from the connector. The identifying terminal has a voltage level that changes in response to the user operation being performed on the discharge start switch. The processor: controls the power converter so that the power converter begins an output of an electric power having the first voltage, when the voltage on the identifying terminal changes between the first bound and a third bound which is different from the first bound and the second bound; and controls the power converter so that the power converter begins an output of an electric power having the second voltage, when the voltage on the identifying terminal changes between the second bound and the third bound.
(4) The third bound includes a fourth bound and a fifth bound, which do not overlap. The processor: controls the power converter so that the power converter begins the output of the electric power having the first voltage, when the voltage on the identifying terminal changes between the first bound and the fourth bound; and controls the power converter so that the power converter begins the output of the electric power having the second voltage, when the voltage on the identifying terminal changes between the second bound and the fifth bound.
(5) The processor: controls the power converter so that the power converter begins the output of the electric power having the first voltage, when a change between the first bound and the third bound is detected multiple times in the voltage on the identifying terminal; and controls the power converter so that the power converter begins the output of the electric power having the second voltage, when a change between the second bound and the third bound is detected multiple times in the voltage on the identifying terminal.
(6) The identifying terminal is a CS terminal through which a proximity detection signal, defined by International Electrotechnical Commission (IEC) 61851-1, is transmitted. The first bound and the second bound are voltage ranges that are undefined by IEC 61851-1 for the voltage on the CS terminal.
(7) A vehicle according to another aspect of the present disclosure includes the vehicle controller described above.
(8) A method according to a still another aspect of the present disclosure supplies an electric power from a vehicle to outside via a discharge connector. The vehicle (1) includes a connector to which the discharge connector is connected, and adjusts a voltage of an electric power discharged from the connector. The connector has an identifying terminal. The method includes: discharging, by the vehicle, an electric power having a first voltage from the connector, when a voltage on the identifying terminal is in a first bound; and discharging, by the vehicle, an electric power having a second voltage different from the first voltage from the connector, when the voltage on the identifying terminal is in a second bound different from the first bound.
(9) A computer program according to a still another aspect of the present disclosure instructions for causing a computer, when the computer is executed, to perform the method described above.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a diagram schematically showing an overall configuration of a power supply system according to Embodiment 1.
Fig. 2 is a diagram showing a configuration example of a vehicle, a discharge connector, and an electronic device.
Fig. 3 is a diagram showing one example of terminals included in a connector of the discharge connector.
Fig. 4 is a diagram for illustrating voltage ranges of a proximity detection signal, as defined by the International Standards (IEC 61851-1).
Fig. 5 is a diagram for illustrating allocation of voltage ranges for the proximity detection signal, according to Example 1 of Embodiment 1.
Fig. 6 is a circuit block diagram showing one configuration example of a discharge connector for AC 100V, according to Example 1 of Embodiment 1.
Fig. 7 is a circuit block diagram showing one configuration example of a discharge connector for AC 200V output power, according to Example 1 of Embodiment 1.
Fig. 8 is a time diagram showing changes over time in proximity detection signal when the discharge connector for AC 100V is used, according to Example 1 of Embodiment 1.
Fig. 9 is a time diagram showing changes over time in proximity detection signal when the discharge connector for AC 200V is used, according to Example 1 of Embodiment 1.
Fig. 10 is a flowchart illustrating a process which is performed by an electronic control unit (ECU), according to Example 1 of Embodiment 1.
Fig. 11 is a diagram for illustrating allocation of voltage ranges for the proximity detection signal, according to Example 2 of Embodiment 1.
Fig. 12 is a time diagram showing changes over time in proximity detection signal when the discharge connector for AC 100V is used, according to Example 2 of Embodiment 1.
Fig. 13 is a time diagram showing changes over time in proximity detection signal when the discharge connector for AC 200V is used, according to Example 2 of Embodiment 1.
Fig. 14 is a flowchart illustrating a process which is performed by the ECU, according to Example 2 of Embodiment 1.
Fig. 15 is a diagram for illustrating allocation of a voltage range for the proximity detection signal, according to Example 3 of Embodiment 1.
Fig. 16 is a time diagram showing changes over time in proximity detection signal when the discharge connector for AC 100V is used, according to Example 3 of Embodiment 1.
Fig. 17 is a time diagram changes over time in proximity detection signal when the discharge connector for AC 200V is used, according to Example 3 of Embodiment 1.
Fig. 18 is a flowchart illustrating a process which is performed by the ECU, according to Example 3 of Embodiment 1.
Fig. 19 is a circuit block diagram showing one configuration example of the discharge connector according to a variation of Embodiment 1.
Fig. 20 is a diagram schematically showing an overall configuration of a power supply system according to Embodiment 2.
Fig. 21 is a diagram showing a configuration example of a vehicle and an electric vehicle power system (EVPS).
Fig. 22 is a circuit block diagram one configuration example of a discharge connector according to Embodiment 2.
Fig. 23 is a control sequence diagram showing a flowchart of the entirety of a discharge control in V2H (Vehicle to Home).

### DESCRIPTION OF THE PREFERRED EMBODIMENTS

Hereinafter, embodiments according to the present disclosure will be described in detail, with reference to the accompanying drawings. Note that the same reference sign is used to refer to the same or like parts, and the description thereof will not be repeated.

### [Embodiment 1]

Embodiment 1 will be described with reference to a power supply system according to an embodiment of the present disclosure performing V2L (Vehicle to Load).

### <System Configuration>

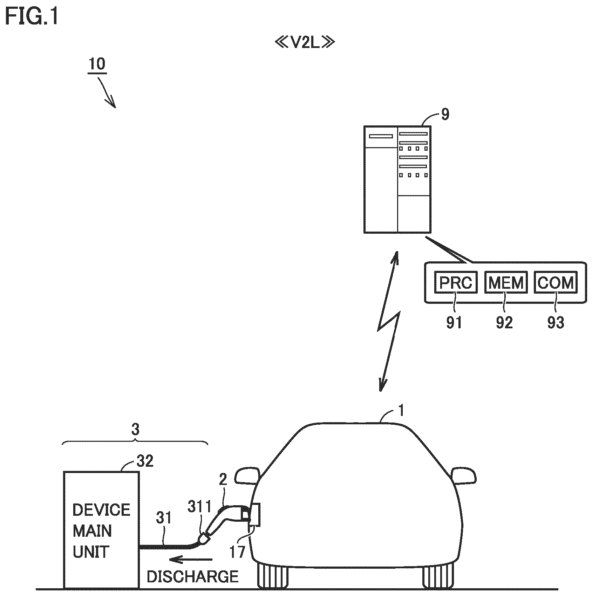

Fig. 1 is a diagram schematically showing an overall configuration of a power supply system according to Embodiment 1. A power supply system 10 includes a vehicle 1, a discharge connector 2, an electronic device 3, and a server 9.

The vehicle 1 is capable of performing V2L. The vehicle 1 according to the present embodiment is capable of discharging an alternating current (AC) power to the electronic device 3. More specifically, the vehicle 1 is a battery electric vehicle (BEV), a plug-in hybrid electric vehicle (PHEV), a fuel cell electric vehicle (FCEV), etc.

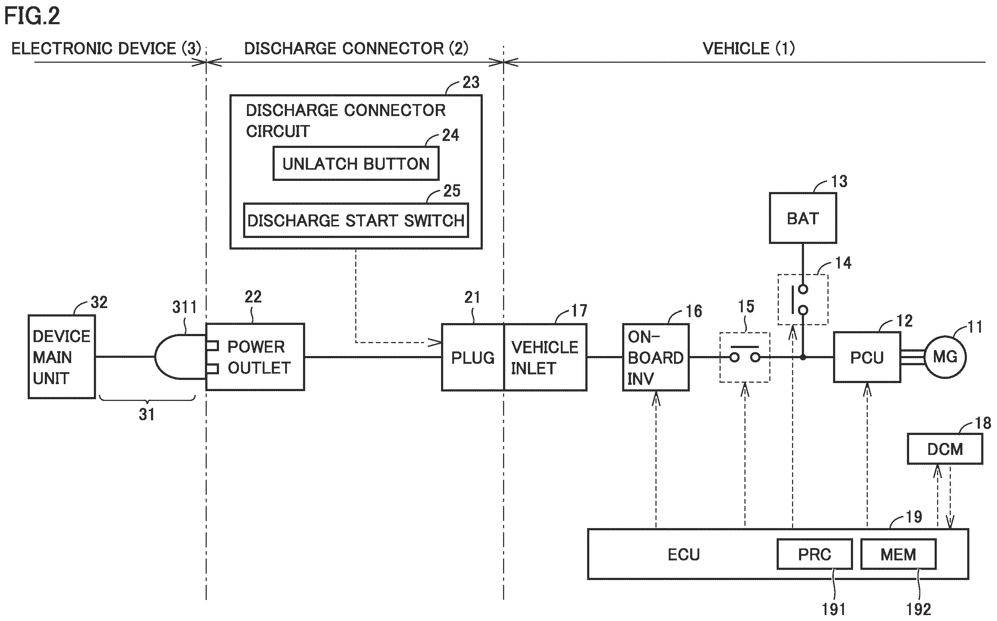

The discharge connector 2 is also called a vehicle power connector (VPC), and connected to a vehicle inlet 17 of the vehicle 1. The electric power discharged from the vehicle 1 is supplied to a device main unit 32 via the discharge connector 2 and a power cable 31 of the electronic device 3. A specific configuration of the discharge connector 2 according to the present embodiment will be described, with respect to Figs. 2, 3, 7, 8, etc.

The electronic device 3 operates by consuming AC power. The type of the electronic device 3 is not particularly limited. The electronic device 3 is not limited to be a home appliance (consumer appliance), and may be an industrial appliance (heavy electrical equipment). In this example, the operating voltage for the electronic device 3 is AC 100V (corresponding to a "first voltage" according to the present disclosure) or AC 200V (corresponding to a "second voltage" according to the present disclosure). However, the operating voltage of the electronic device 3 can depend on a sales area of the electronic device 3, for example. The operating voltage of the electronic device 3 may also be AC 120V or AC 240V, for example.

The server 9 includes a processor 91 such as a central processing unit (CPU), a memory 92 such as a read only memory (ROM) and a random access memory (RAM), and a communication device 93. The processor 91 executes arithmetic processes related to a discharge control over an electric power from the vehicle 1 to the electronic device 3. The memory 92 stores programs which can be executed by the processor 91. Using the communication device 93, the server 9 performs two-way wireless communications with the vehicle 1. The server 9 transmits commands to the vehicle 1, thereby controlling the discharge operation by the vehicle 1.

Fig. 2 is a diagram showing a configuration example of the vehicle 1, the discharge connector 2, and the electronic device 3. In this example, the vehicle 1 is a battery electric vehicle, and includes a motor generator 11, a power control unit (PCU) 12, an on-board battery 13, a system main relay (SMR) 14, a discharge relay 15, an on-board inverter 16, the vehicle inlet 17, a communication module 18, and an electronic control unit (ECU) 19.

The motor generator 11 is, for example, a three-phase AC rotating electric machine. The motor generator 11 uses an AC power, discharged from the on-board battery 13, to rotate the drive shaft. The motor generator 11 is also capable of generating power by regenerative braking. The AC power generated by the motor generator 11 is converted into a direct current (DC) power by the PCU 12 and charged to the on-board battery 13.

The PCU 12 is electrically connected to the motor generator 11. The PCU 12 includes a converter and an inverter (none of which are shown). The PCU 12 performs bi-directional power conversion between the on-board battery 13 and the motor generator 11, in accordance with commands from the ECU 19.

The on-board battery 13 is electrically connected to the SMR 14. The on-board battery 13 is an assembled battery formed of multiple cells (not shown). Each cell is, representatively, a secondary battery such as a lithium-ion battery, a nickel-hydrogen battery, etc. The on-board battery 13 stores power which is supplied from the external charger (not shown) or generated by the motor generator 11. The on-board battery 13 then supplies the motor generator 11 with a DC power for causing a driving force for the vehicle 1 while the vehicle 1 is traveling. While the vehicle 1 is stopped, the on-board battery 13 supplies the on-board inverter 16 with a DC power for AC to DC conversion. Note that a capacitor, such as an electric double layer capacitor, may be employed, instead of the on-board battery 13.

The SMR 14 has one end electrically connected to the on-board battery 13. The SMR 14 has the other end electrically connected to a power line connecting the PCU 12 and the discharge relay 15. The SMR 14 closes/opens in response to commands from the ECU 19.

The discharge relay 15 is electrically connected between the PCU 12 and the on-board inverter 16. Similarly to the SMR 14, the discharge relay 15 closes/opens in response to commands from the ECU 19. When the SMR 14 is closed and the discharge relay 15 is closed, supply of DC power is enabled from the on-board battery 13 to the on-board inverter 16.

The on-board inverter 16 is electrically connected between the discharge relay 15 and the vehicle inlet 17. In this example, the on-board inverter 16 is a two-way charger that can convert AC power into DC power and vice versa. However, the on-board inverter 16 may separately include a one-way charger for converting AC power into DC power and an AC inverter for converting DC power into AC power (none of which are shown).

In the present embodiment, the on-board inverter 16 adjusts the voltage of AC power, in accordance with commands from the ECU 19. More specifically, the on-board inverter 16 is capable of outputting 100V AC power (more specifically, split-phase 100V AC power) and AC 200V AC power (more specifically, split-phase 200V AC power). The on-board inverter 16 is one example of a "power converter" according to the present disclosure. The electric power that is supplied from the vehicle 1 may be DC power, as described below. In this case, the "power converter" according to the present disclosure may be a DC-to-DC converter.

The vehicle inlet 17 is electrically connected to the on-board inverter 16. A charging connector (not shown) extending from the charging cable of an external charger, and the discharge connector 2 are insertable to the vehicle inlet 17. When the discharge connector 2 is inserted into the vehicle inlet 17, the vehicle inlet 17 can receive a proximity detection signal (described later) from the discharge connector 2, in addition to outputting a discharging power to the discharge connector 2.

When the vehicle inlet 17 is used to discharge electric power, the term "outlet" may be used, instead of the "inlet." However, the term "inlet" will be used herein, in accordance with the International Standards (IEC 62196-2: 2011) with respect to vehicle couplers. The vehicle inlet 17 corresponds to a "connector" according to the present disclosure.

The communication module 18 is a digital communication module (DCM) capable of wireless communications with the server 9 (see Fig. 1). The vehicle 1 can transmit various data to the server 9 and receive commands from the server 9, through communications by the communication module 18.

The ECU 19 includes a processor 191 such as a CPU, a memory 192 such as a ROM and a RAM, and input/output ports (not shown). In response to signals from various sensors, the ECU 19 controls the devices mounted on the vehicle 1 so that the vehicle 1 is brought into a desired state. Examples of the main control that is performed by the ECU 19 in the present embodiment include a discharge control, in which an electric power is discharged from the vehicle 1 to the electronic device 3 via the discharge connector 2. Note that the ECU 19 may be divided into two or more ECUs by function (e.g., a charge and discharge ECU for controlling charging and discharging by the vehicle 1, a battery ECU for managing the on-board battery 13, a MG ECU for a driving control over the vehicle 1, etc.).

The discharge connector 2 includes a plug (a joint between the discharge connector 2 and the vehicle 1) 21, a power outlet 22, and a discharge connector circuit 23. The discharge connector circuit 23 includes an unlatch button 24 and a discharge start switch 25.

The plug 21 is insertable into the vehicle inlet 17. For example, the plug 21 includes five terminals described below.

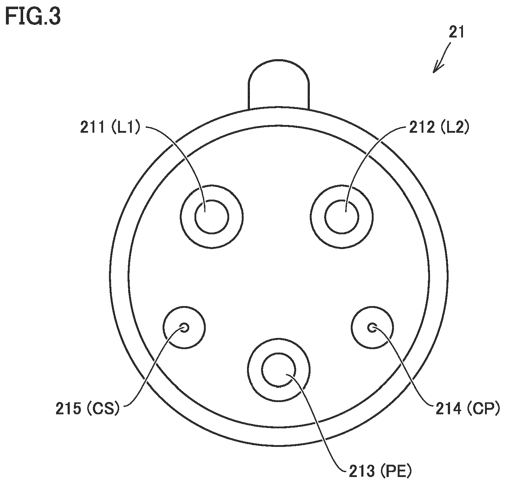

Fig. 3 is a diagram showing one example of terminals included in the plug 21 of the discharge connector 2. The plug 21 includes an L1 terminal 211, an L2 terminal 212, a PE terminal 213, a CP terminal 214, and a CS terminal 215.

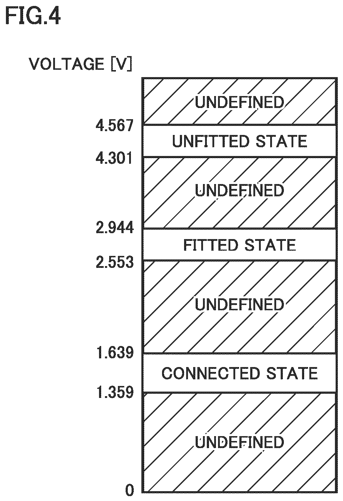

The L1 terminal 211 and the L2 terminal 212 are a pair of AC terminals for transmission of AC power. The PE terminal 213 is a ground terminal which is connected to the body ground of the vehicle 1 as the discharge connector 2 and the vehicle inlet 17 are connected together. The CP terminal 214 is a signal terminal through which a control pilot (CPLT) signal is transmitted. The CS terminal 215 is a terminal through which a proximity detection signal is transmitted. The CS terminal 215 corresponds to an "identifying terminal" according to the present disclosure. The proximity detection signal will be described in detail, with respect to Fig. 4.

Referring back to Fig. 2, the power outlet 22 is capable of being plugged in by a power plug 311 of the electronic device 3. The discharge connector circuit 23 is a circuit for generating the CPLT signal and the proximity detection signal.

The unlatch button 24 receives user operations for releasing the latch (lock) engagement of the discharge connector 2 (the plug 21) and the vehicle inlet 17. More specifically, as a user inserts the plug 21 into the vehicle inlet 17, the vehicle inlet 17 and the plug 21 are automatically latched by a latch mechanism. As a user operates the unlatch button 24, the latch is released, allowing the plug 21 to be removed from the vehicle inlet 17.

The discharge start switch 25 is a switch for starting a discharge of an electric power from the vehicle inlet 17 to the discharge connector 2. As a user operates the discharge start switch 25, the proximity detection signal changes in voltage (which will be described later in detail). The ECU 19 senses the user operation by detecting this voltage change. If the ECU 19 senses twice in a row the user operation on the discharge start switch 25, the ECU 19 starts a discharge of the electric power from the vehicle inlet 17 to the discharge connector 2.

### <Proximity Detection Signal>

Fig. 4 is a diagram for illustrating voltage ranges of the proximity detection signal, as defined by the International Standards (IEC 61851-1). The connection state of the discharge connector 2 and the vehicle inlet 17 is classified into a connected state, a fitted state, or an unfitted state.

The connected state refers to a state in which the discharge connector 2 (the plug 21) is inserted into the vehicle inlet 17, all the terminals (see Fig. 3) of the discharge connector 2 are electrically connected to the vehicle inlet 17, and the discharge connector 2 and the vehicle inlet 17 are latched. The fitted state refers to a state in which the discharge connector 2 is inserted into the vehicle inlet 17, all the terminals of the discharge connector 2 are electrically connected to the vehicle inlet 17, and the discharge connector 2 and the vehicle inlet 17 are not latched. The unfitted state refers to any state other than the connected state and the fitted state.

A voltage range indicative of the connected state, a voltage range indicative of the fitted state, and a voltage range indicative of the unfitted state are defined, according to IEC 61851-1, as voltage ranges for the proximity detection signal. The voltage ranges of the proximity detection signal further includes undefined voltage ranges, other than the three defined voltage ranges stated above. Specifically, a voltage range from zero V to 1.359V, a voltage range from 1.639V to 2.553V, a voltage range from 2.944V to 4.301V, and a voltage range higher than 4.567V are all undefined voltage ranges.

In order to use various electronic devices 3, there is a demand for supply, from the vehicle 1, of AC power having a voltage appropriate to the operating voltage of the electronic device 3. Desirably, such a power having an appropriate voltage is supplied in an as simple configuration as possible.

Thus, in the present embodiment, the discharge connector 2, which is used to supply an electric power to the electronic device 3, is prepared in response to the operating voltage of the electronic device 3. More specifically, a discharge connector 2A is used to supply an electric power to the electronic device 3 operating at AC 100V, and another discharge connector 2B is used to supply an electric power to the electronic device 3 operating at AC 200V. Then, the undefined voltage ranges shown in Fig. 4 are newly allocated as voltage ranges for the proximity detection signal, thereby enabling the ECU 19 to identify which one of the discharge connectors 2A and 2B is connected to the vehicle inlet 17. This allows the ECU 19 to determine the voltage to be supplied to the electronic device 3, enabling an AC power having an appropriate voltage to be supplied to the electronic device 3. Various variations are considered as an approach to allocate the undefined voltage ranges. In the following, representative three examples will be described in turn.

### [Example 1 of Embodiment 1]

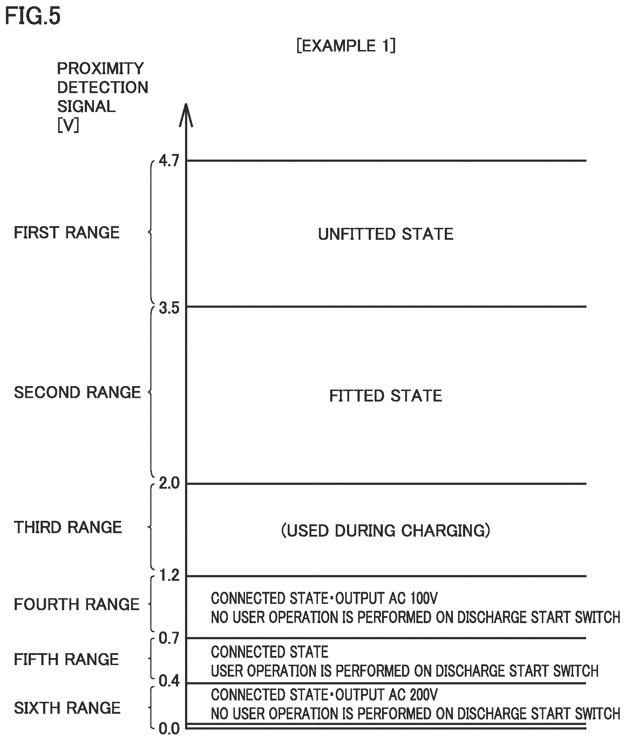

Fig. 5 is a diagram for illustrating allocation of voltage ranges for the proximity detection signal according to Example 1 of Embodiment 1. In Example 1, the proximity detection signal is divided into six voltage ranges. The six voltage ranges will be described as a "first range," a "second range," a "third range," a "fourth range," a "fifth range," and a "sixth range," in order starting from the highest voltage range to the lowest. It should be understood that the specific voltage values below are by way of example.

The first range is a voltage range from 3.5V to 4.7V, indicating that the discharge connector 2 and the vehicle inlet 17 are unfitted. The second range is a voltage range from 2.0V to 3.5V, indicating that the discharge connector 2 and the vehicle inlet 17 are fitted. The third range is a voltage range from 1.2V to 2.0V, which is used during the charging of the vehicle 1. The fourth to sixth ranges are voltage ranges that are newly defined for the voltage range from zero V to 1.359V that is undefined by IEC 61851-1.

The fourth range is a voltage range from 0.7V to 1.2V. The fourth range indicates that the discharge connector 2 and the vehicle inlet 17 are connected, and that the discharge connector 2A for AC 100V is connected to the vehicle inlet 17. The fourth range further indicates that no user operation is performed on the discharge start switch 25.

The fifth range is a voltage range from 0.4V to 0.7V. The fifth range indicates that the discharge connector 2 and the vehicle inlet 17 are connected and that a user operation is performed on the discharge start switch 25.

The sixth range is a voltage range from 0.0V to 0.4V. The sixth range indicates that the discharge connector 2 and the vehicle inlet 17 are connected and that the discharge connector 2B for AC 200V is connected to the vehicle inlet 17. The sixth range further indicates that no user operation is performed on the discharge start switch 25.

Note that, in Example 1, the fourth range corresponds to a "first bound" according to the present disclosure. The sixth range corresponds to a "second bound" according to the present disclosure. The fifth range corresponds to a "third bound" according to the present disclosure.

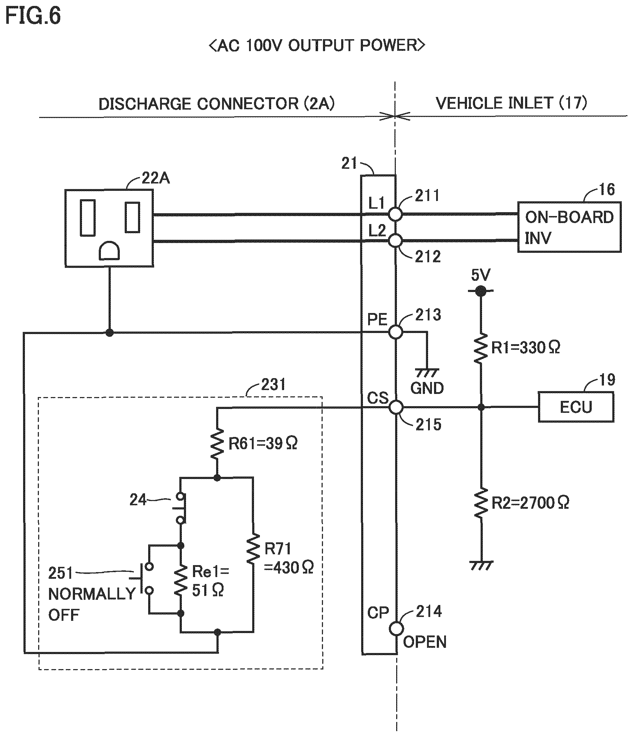

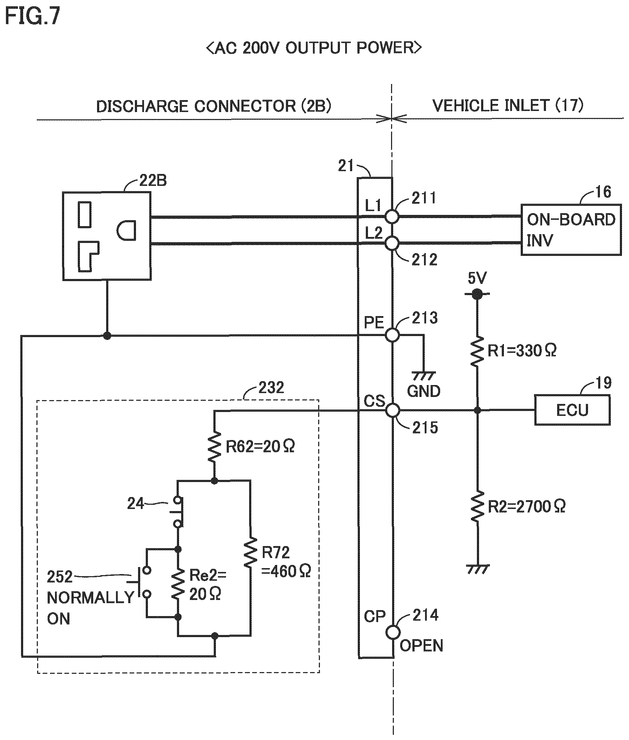

Fig. 6 is a circuit block diagram showing one configuration example of the discharge connector 2A for AC 100V, according to Example 1 of Embodiment 1. Fig. 7 is a circuit block diagram showing one configuration example of the discharge connector 2B for AC 200V, according to Example 1 of Embodiment 1.

Referring to Fig. 6, the discharge connector 2A for AC 100V includes a discharge connector circuit 231. The discharge connector circuit 231 includes an unlatch button 24, a discharge start switch 251, and resistors R61, R71, and Re1.

The resistor R71 and the resistor Re1 are connected in parallel. The resistor R61 is connected in series to a parallel circuit formed of the resistor R71 and the resistor Re1. The unlatch button 24 is connected in series to the resistor Re1. The discharge start switch 251 is connected in parallel to the resistor Re1. The discharge start switch 251 is a normally-off switch, which is open when not in operation, and is shorted when in operation.

If the discharge connector 2A and the vehicle inlet 17 are connected, the voltage on the CS terminal 215 is pulled up by a 5V power supply and a pull-up resistor R1 of the vehicle inlet 17. In this example, the resistor R61 = 39Ω, the resistor R71 = 430Ω, and the resistor Re1 = 51Ω. Configuring each resistance as such renders the proximity detection signal in the fourth range when the discharge start switch 251 is not in operation (is open), and the fifth range when the discharge start switch 251 is in operation (shorted).

Referring to Fig. 7, the discharge connector 2B for AC 200V output power includes a discharge connector circuit 232, instead of the discharge connector circuit 231. The discharge connector circuit 232 includes an unlatch button 24, a discharge start switch 252, and resistors R62, R72, and Re2.

The connection relationship between the components of the discharge connector circuit 232 is equivalent to the connection relationship between corresponding components of the discharge connector circuit 231. In other words, the resistor R72 and the resistor Re2 are connected in parallel. The resistor R62 is connected in series to a parallel circuit formed of the resistor R72 and the resistor Re2. The unlatch button 24 is connected in series to the resistor Re2. The discharge start switch 252 is connected in parallel to the resistor Re2.

Meanwhile, the discharge start switch 251 for AC 100V is a normally-off switch, whereas the discharge start switch 252 for AC 200V is a normally-on switch. The discharge start switch 252 is shorted when not in operation, and open when in operation.

In this example, the resistor R62 = 20Ω, the resistor R72 = 460Ω, and the resistor Re2 = 20Ω. Setting each resistance as such renders the proximity detection signal in the sixth range if the discharge start switch 252 is not in operation (shorted) and the fifth range if the discharge start switch 252 is in operation (open), while the discharge connector 2B and the vehicle inlet 17 are om the connected state.

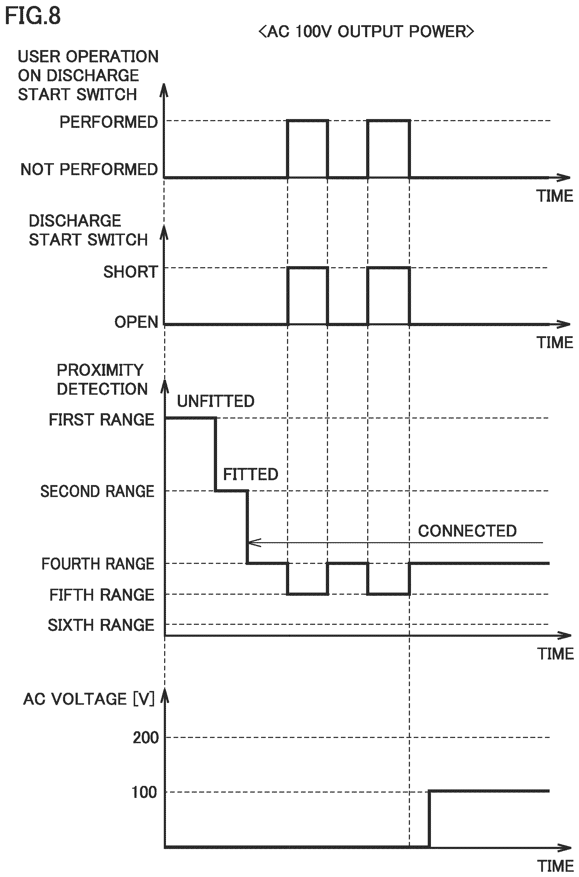

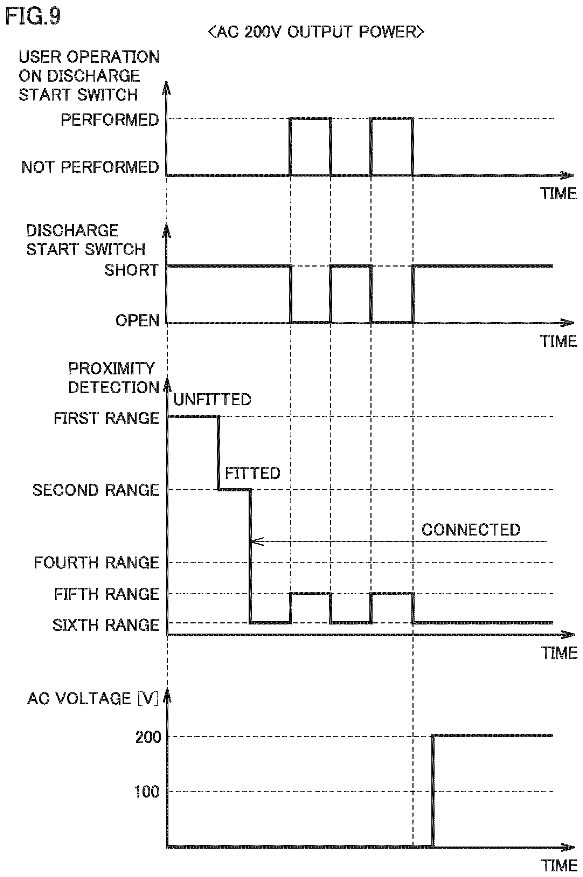

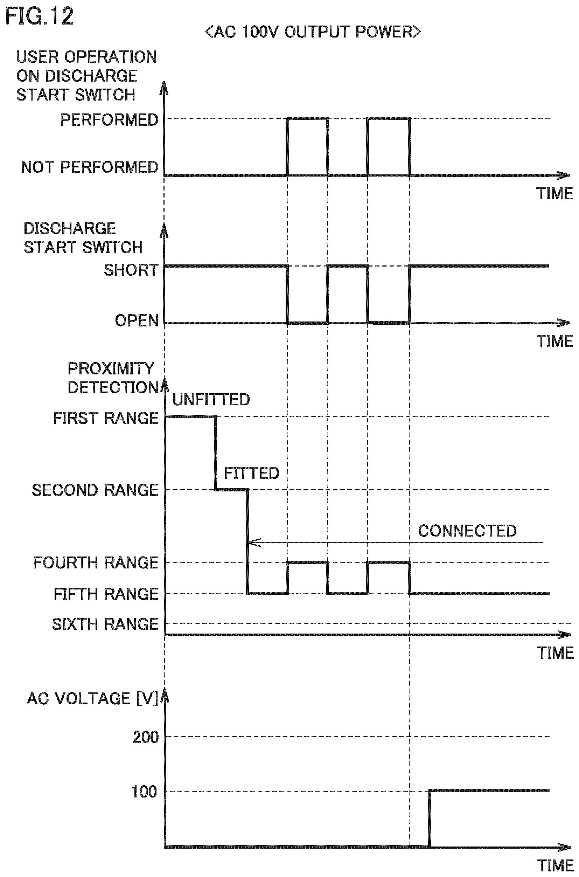

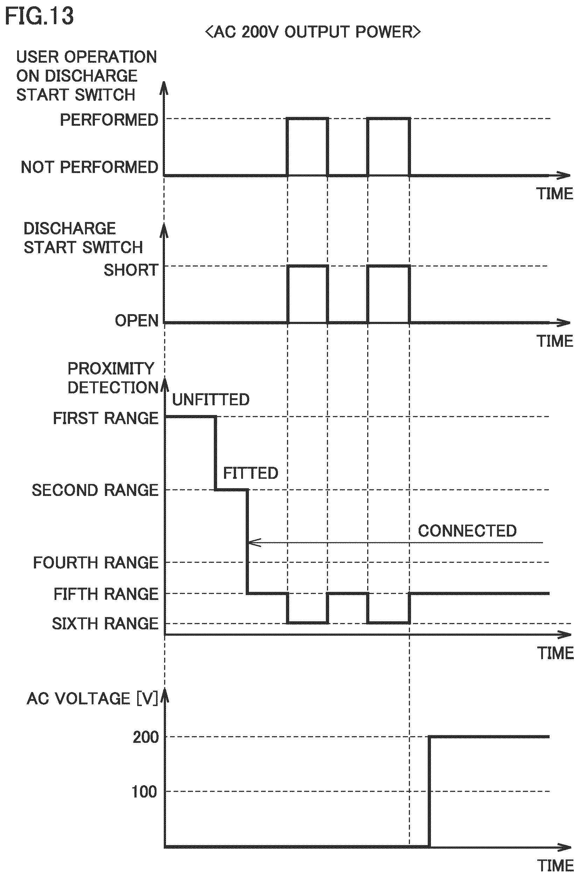

Fig. 8 is a time diagram showing changes over time in proximity detection signal when the discharge connector 2A for AC 100V is used, according to Example 1 of Embodiment 1. Fig. 9 is a time diagram showing changes over time in proximity detection signal when the discharge connector 2B for AC 200V is used, according to Example 1 of Embodiment 1. Elapsed time is indicated on the horizontal axis. Indicated from top to bottom on the vertical axis are: the presence or absence of the user operation (turn-on/turn-off) on the discharge start switches 251 and 252; whether the discharge start switches 251 and 252 are shorted/open; the proximity detection signal; and the voltage of AC power output from the on-board inverter 16. The same stands true for Figs. 12 and 13 described later.

Referring to Fig. 8, as the user inserts the discharge connector 2A for AC 100V into the vehicle inlet 17, the discharge connector 2A and the vehicle inlet 17 are automatically latched, at which time the connection state of the discharge connector 2A and the vehicle inlet 17 transitions from the unfitted state to the fitted state, then the connected state. Along with this, the proximity detection signal changes in voltage range from the first range to the second range, then the fourth range.

Subsequently, the user turns on twice in a row the discharge start switch 251 in order to initiate the supply of power from the vehicle 1 to the electronic device 3. The turn-on operation is required twice for the purpose of prevention of inadvertent operation. At this time, the point of contact of the normally-off discharge start switch 251 changes from the short state to the open state, the short state, then the open state. On that occasion, the proximity detection signal changes in voltage range from the fifth range to the fourth range, the fifth range, then the fourth range. If such changes are detected in voltage of the proximity detection signal, the ECU 19 controls the on-board inverter 16 so that the on-board inverter 16 begins an output of AC 100V.

Referring to Fig. 9, as the user inserts the discharge connector 2B for AC 200V into the vehicle inlet 17, the connection state of the discharge connector 2B and the vehicle inlet 17 transitions from the unfitted state to the fitted state, then the connected state, as with Fig. 8. Along with this, the proximity detection signal changes in voltage range from the first range to the second range, then the sixth range.

Subsequently, as the user turns on twice in a row the discharge start switch 252, the point of contact of the normally-on discharge start switch 251 changes from the open state to the short state, the open state, then the short state. On that occasion, the proximity detection signal changes in voltage range from the fifth range to the sixth range, the fifth range, then the sixth range. If such changes are detected in voltage of the proximity detection signal, the ECU 19 controls the on-board inverter 16 so that the on-board inverter 16 begins an output of AC 200V.

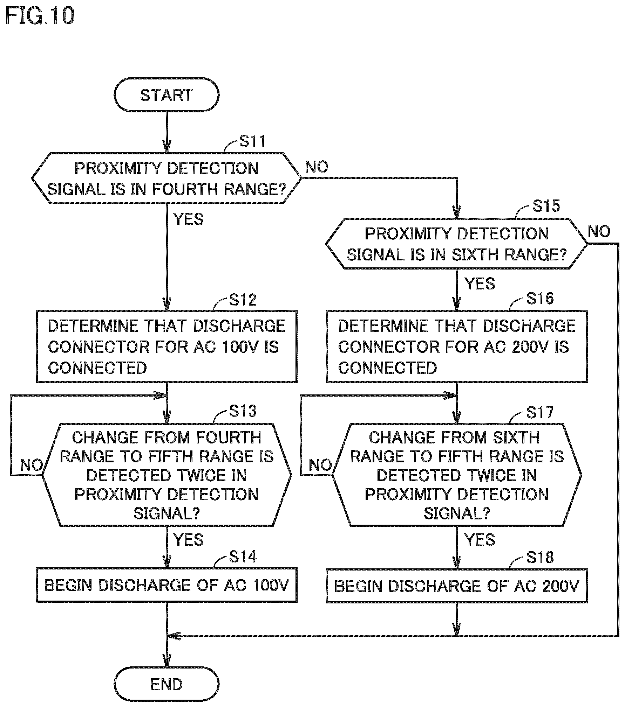

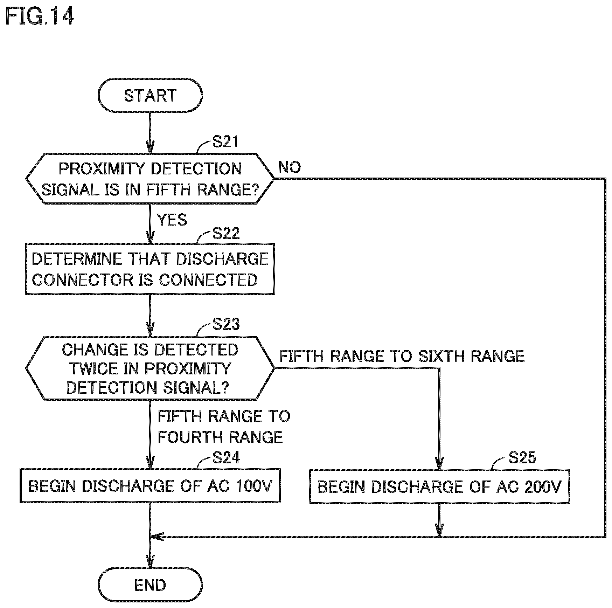

Fig. 10 is a flowchart illustrating a process which is performed by the ECU 19, according to Example 1 of Embodiment 1. The process is invoked from the main routine (not shown) and executed once predetermined conditions are satisfied, for example. The SMR 14 and the discharge relay 15 are both closed when the process is executed. Each process step is implemented by software processing by the ECU 19. However, each process step may be implemented by hardware (an electric circuit) disposed within the ECU 19. Hereinafter, each process step is abbreviated as S. The same stands true for the flowcharts of Fig. 14, etc. described later.

In S11, the ECU 19 determines whether the proximity detection signal is in the fourth range. If the proximity detection signal is in the fourth range (YES in S11), the ECU 19 determines that the discharge connector 2A for AC 100V is connected to the vehicle inlet 17 (S12).

In S13, the ECU 19 determines whether a user operation is detected twice on the discharge start switch 251. In other words, the ECU 19 determines whether a change from the fourth range to the fifth range is detected twice in voltage range of the proximity detection signal as illustrated in Fig. 8. If such changes over time are detected in proximity detection signal (YES in S13), the ECU 19 controls the on-board inverter 16 so that the on-board inverter 16 begins an output of AC 100V (S14).

In S11, if the proximity detection signal is out of the fourth range (NO in S11), the ECU 19 proceeds to S15, in which the ECU 19 determines whether the proximity detection signal is in the sixth range. If the proximity detection signal is out of the sixth range (NO in S15), the ECU 19 returns the process to the main routine. If the proximity detection signal is in the sixth range (YES in S15), the ECU 19 determines that the discharge connector 2B for AC 200V is connected to the vehicle inlet 17 (S16).

In S17, the ECU 19 determines whether a user operation is detected twice on the discharge start switch 252. In other words, the ECU 19 determines whether a change from the sixth range to the fifth range is detected twice in voltage range of the proximity detection signal as illustrated in Fig. 9. If such changes over time are detected in proximity detection signal (YES in S17), the ECU 19 controls the on-board inverter 16 so that the on-board inverter 16 begins an output of AC 200V (S18).

As described above, in Example 1, the ECU 19 identifies the type of the discharge connector 2 connected to the vehicle inlet 17 (whether the discharge connector 2 is the discharge connector 2A for AC 100V or the discharge connector 2B for AC 200V), based on the manner of change in voltage of the proximity detection signal in the voltage ranges that are undefined by the International Standards IEC 61851-1. This allows the ECU 19 to supply the electronic device 3 via the discharge connector 2 with AC power having a voltage that is appropriate for the operation of the electronic device 3. Different manners of changes in voltage of the proximity detection signal result from different resistances of the three resistors included in the discharge connector circuit 23. Thus, according to Example 1, AC power having an appropriate voltage can be supplied in a simple configuration.

Note that Figs. 8 to 10 have been described with reference to the ECU 19 of the vehicle 1 identifying the type of the discharge connector 2 based on the proximity detection signal. However, the type of the discharge connector 2 is not limited to be identified by the ECU 19, and may be identified by, for example, the server 9. The vehicle 1 transmits the voltage of the proximity detection signal to the server 9. The server 9 identifies the type of the discharge connector 2, based on the voltage of the proximity detection signal, and transmits a result of the identification to the vehicle 1. This allows the server 9 to instruct the ECU 19 as to which one of AC 100V and AC 200V at which the ECU 19 should control the on-board inverter 16.

The description also has been given that an output of AC power from the on-board inverter 16 begins if a user operation is detected twice on the discharge start switch 25. However, the ECU 19 may cause the on-board inverter 16 to begin an output of AC power, provided that an operation on the discharge start switch 25 is detected once.

Furthermore, the user operation on the discharge start switch 25 is not necessary to begin the electric power discharge. The discharge connector 2 may not include the discharge start switch 25. For example, the on-board inverter 16 may begin an output of AC power if a specified time period elapses since the discharge connector 2 and the vehicle inlet 17 have been connected together (since the discharge connector 2 has been latched with the vehicle inlet 17).

### [Example 2 of Embodiment 1]

Example 2 will be described in which the discharge start switch 251, included in the discharge connector 2A for AC 100V, is a normally-on switch and the discharge start switch 252, included in the discharge connector 2B for AC 200V, is a normally-off switch, as opposed to Example 1. The circuit structures of the discharge connectors 2A and 2B are equal to those shown in the circuit block diagrams of Figs. 6 and 7, except for the attributes of the discharge start switches 251 and 252, and the description thereof will thus not be repeated.

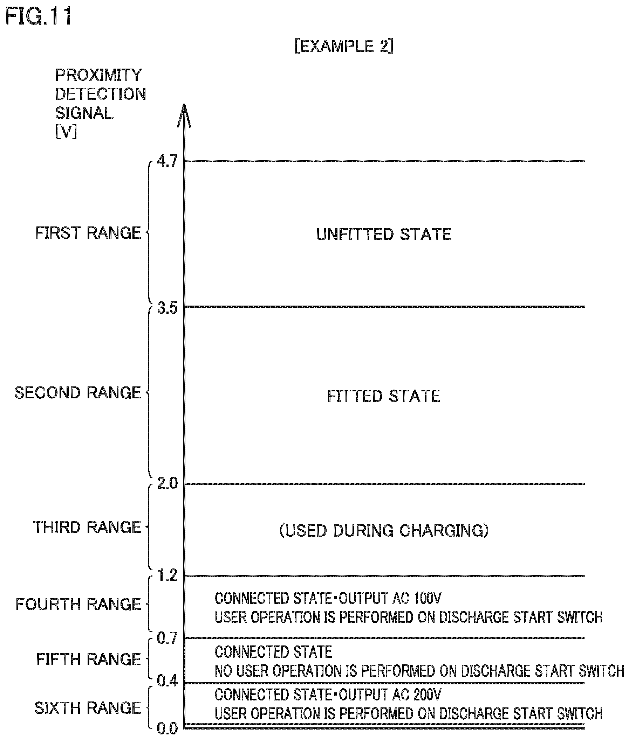

Fig. 11 is a diagram for illustrating allocation of voltage ranges for the proximity detection signal, according to Example 2 of Embodiment 1. In Example 2, the proximity detection signal is divided into the "first range" to the "sixth range," as with Example 1. The first range to the third range of Example 2 are equal to the first range to the third range (see Fig. 5), respectively, of Example 1. The numeric values of the voltage ranges in the fourth range to the sixth range of Example 2 are also equal to the numeric values of the voltage range in corresponding ranges of Example 1. The fourth range to the sixth range of Example 2 are equal to the fourth range to the sixth range of Example 1 in that the fourth range to the sixth range of Example 2 indicate that the discharge connector and the vehicle inlet 17 are connected together.

Meanwhile, the fourth range of Example 2 differs from the fourth range of Example 1 in that the fourth range of Example 2 indicates that a user operation is performed on the discharge start switch 25. The fifth range of Example 2 differs from the fourth range of Example 1 in that the fifth range of Example 2 indicates that no user operation is performed on the discharge start switch 25. The sixth range of Example 2 differs from the sixth range of Example 1 in that the sixth range of Example 2 indicates that a user operation is performed on the discharge start switch 25.

In Example 2, the fourth range corresponds to the "first bound" according to the present disclosure, as with Example 1. The sixth range corresponds to the "second bound" according to the present disclosure. The fifth range corresponds to the "third bound" according to the present disclosure.

Fig. 12 is a time diagram showing changes over time in proximity detection signal when the discharge connector 2A for AC 100V is used, according to Example 2 of Embodiment 1. Fig. 13 is a time diagram showing changes over time in proximity detection signal when the discharge connector 2B for AC 200V is used, according to Example 2 of Embodiment 1.

Referring to Fig. 12, the connection state of the discharge connector 2A for AC 100V and the vehicle inlet 17 transitions from the unfitted state to the fitted state, then the connected state. Along with this, the proximity detection signal changes in voltage range from the first range to the second range, then the fifth range.

Subsequently, as the user turns on twice in a row the discharge start switch 251 included in the discharge connector 2A, the point of contact of the normally-on discharge start switch 251 changes from the open state to the short state, the open state, then the short state. On that occasion, the proximity detection signal changes in voltage range from the fourth range to the fifth range, the fourth range, then the fifth range. If such changes are detected in voltage of the proximity detection signal, the ECU 19 controls the on-board inverter 16 so that the on-board inverter 16 begins an output of AC 100V.

Referring to Fig. 13, the connection state of the discharge connector 2B for AC 200V and the vehicle inlet 17 transitions from the unfitted state to the fitted state, then the connected state. Along with this, the proximity detection signal changes in voltage range from the first range to the second range, then the sixth range.

Subsequently, as the user turns on twice in a row the discharge start switch 252 included in the discharge connector 2B, the point of contact of the normally-off discharge start switch 251 changes from the short state to the open state, the short state, then the open state. On that occasion, the proximity detection signal changes in voltage range from the sixth range to the fifth range, the sixth range, then the fifth range. If such changes are detected in voltage of the proximity detection signal, the ECU 19 controls the on-board inverter 16 so that the on-board inverter 16 begins an output of AC 200V.

Fig. 14 is a flowchart illustrating a process which is performed by the ECU 19 according to Example 2 of Embodiment 1. In S21, the ECU 19 determines whether the proximity detection signal is in the fifth range. If the proximity detection signal is out of the fifth range (NO in S21), the ECU 19 returns the process to the main routine.

If the proximity detection signal is in the fifth range (YES in S21), the ECU 19 determines that a discharge connector is connected to the vehicle inlet 17 (S22), while this does not allow the ECU 19 to identify whether the discharge connector connected to the vehicle inlet 17 is the discharge connector 2A for AC 100V or the discharge connector 2B for AC 200V.

In S23, the ECU 19 determines whether a user operation is detected twice on the discharge start switch 25 (the discharge start switch 251 or 252). If a change from the fifth range to the fourth range is detected twice in voltage range of the proximity detection signal (see Fig. 12), the ECU 19 determines that the discharge connector 2A for AC 100V is connected to the vehicle inlet 17, and controls the on-board inverter 16 so that the on-board inverter 16 begins an output of AC 100V (S24). If a change from the fifth range to the sixth range is detected twice in voltage range of the proximity detection signal (see Fig. 13), in contrast, the ECU 19 determines that the discharge connector 2B for AC 200V is connected to the vehicle inlet 17, and controls the on-board inverter 16 so that the on-board inverter 16 begins an output of AC 200V (S25).

As described above, even in Example 2, the ECU 19 identifies the type of the discharge connector 2 connected to the vehicle inlet 17, based on the manner of change in voltage of the proximity detection signal in the voltage ranges that are undefined by IEC 61851-1. This allows the ECU 19 to supply the electronic device 3 via the discharge connector 2 with AC power having a voltage that is appropriate for the operation of the electronic device 3. Different manners of changes in voltage of the proximity detection signal result from different resistances of the three resistors included in the discharge connector circuit 23. Thus, according to Example 1, AC power having an appropriate voltage can be supplied in a simple configuration.

In Example 2, the type of the discharge connector 2 is identified at a moment a user operation is performed on the discharge start switch 25, rather than a moment the connection state of the discharge connector 2 and the vehicle inlet 17 transitions to the connected state. As such, the type of the discharge connector 2 can be identified at any moment after the connection state of the discharge connector 2 and the vehicle inlet 17 has transitioned to the connected state.

### [Example 3 of Embodiment 1]

Examples 1 and 2 have been described with reference to newly allocating to the proximity detection signal the voltage range from zero V to 1.359V undefined by IEC 61851-1. Example 3 will be described with reference to allocating another undefined voltage range to the proximity detection signal, in addition to the voltage range described above.

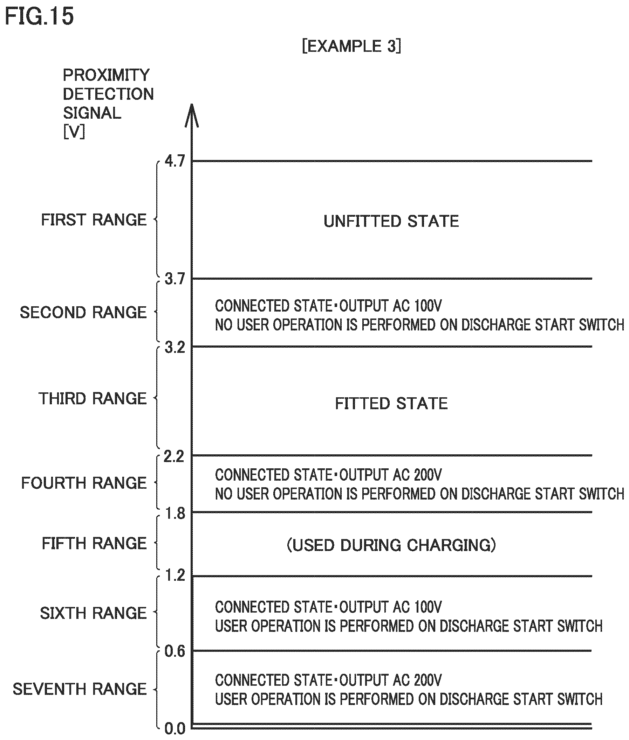

Fig. 15 is a diagram for illustrating allocation of voltage ranges for the proximity detection signal, according to Example 3 of Embodiment 1. In Example 3, the proximity detection signal is divided into a "first range," a "second range," a "third range," a "fourth range," a "fifth range," a "sixth range," and a "seventh range." The specific voltage values below are also by way of example.

The first range is a voltage range from 3.7V to 4.7V, indicating that the discharge connector 2 and the vehicle inlet 17 are unfitted. The third range is a voltage range from 2.2V to 3.2V, indicating that the discharge connector 2 and the vehicle inlet 17 are fitted. The fifth range is a voltage range from 1.2V to 1.8V, which is used during the charging of the vehicle 1. In contrast, the second range, the fourth range, the sixth range, and the seventh range are newly defined voltage ranges.

The second range is a voltage range from 3.2V to 3.7V. The second range indicates that the discharge connector 2 and the vehicle inlet 17 are connected, and that the discharge connector 2A for AC 100V is connected to the vehicle inlet 17. The second range further indicates that no user operation is performed on the discharge start switch 251.

The fourth range is a voltage range from 1.8V to 2.2V. The fourth range indicates that the discharge connector 2 and the vehicle inlet 17 are connected, and that the discharge connector 2B for AC 200V is connected to the vehicle inlet 17. The fourth range further indicates that no user operation is performed on the discharge start switch 252.

The sixth range is a voltage range from 0.6V to 1.2V. The sixth range indicates that the discharge connector 2 and the vehicle inlet 17 are connected, and that the discharge connector 2A for AC 100V is connected to the vehicle inlet 17. The sixth range further indicates that a user operation is performed on the discharge start switch 251.

The seventh range is a voltage range from 0.0V to 0.6V. The seventh range indicates that the discharge connector 2 and the vehicle inlet 17 are connected, and that the discharge connector 2B for AC 200V is connected to the vehicle inlet 17. The seventh range further indicates that a user operation is performed on the discharge start switch 252.

In Example 3, the sixth range corresponds to the "first bound" according to the present disclosure. The seventh range corresponds to the "second bound" according to the present disclosure. The second range and the fourth range correspond to the "third bound" according to the present disclosure. In particular, the second range corresponds to a "fourth bound" according to the present disclosure. The fourth range corresponds to a "fifth bound" according to the present disclosure.

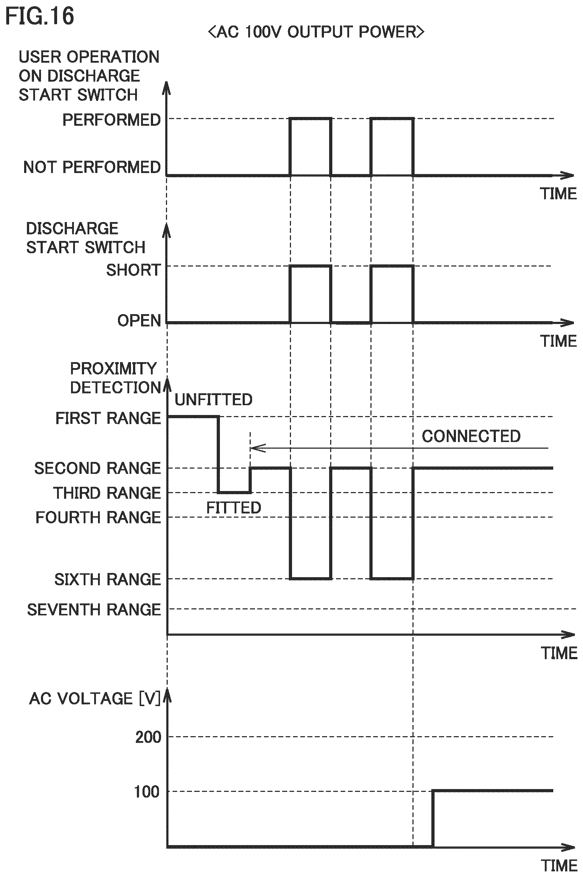

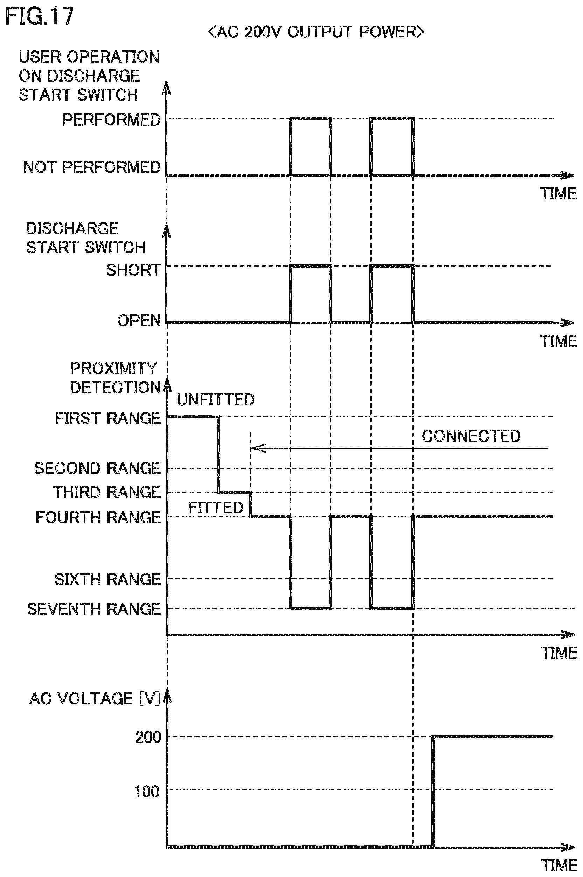

Fig. 16 is a time diagram showing changes over time in proximity detection signal when the discharge connector 2A for AC 100V is used, according to Example 3 of Embodiment 1. Fig. 17 is a time diagram showing changes over time in proximity detection signal when the discharge connector 2B for AC 200V is used, according to Example 3 of Embodiment 1. Here, as one example, the two discharge start switches 251 and 252 are both normally-off switches. However, the discharge start switches 251 and 252 of any attribute (normally-on /normally-off) can be employed.

Referring to Fig. 16, as the connection state of the discharge connector 2A for AC 100V and the vehicle 1 transitions from the unfitted state to the fitted state, then the connected state, the proximity detection signal changes in voltage range from the first range to the third range, then the second range.

Subsequently, as the user turns on twice in a row the discharge start switch 251 included in the discharge connector 2A, the point of contact of the normally-off discharge start switch 251 changes from the short state to the open state, the short state, then the open state. On that occasion, the proximity detection signal changes in voltage range from the sixth range to the second range, the sixth range, then the second range. If such changes are detected in voltage of the proximity detection signal, the ECU 19 controls the on-board inverter 16 so that the on-board inverter 16 begins an output of AC 100V.

Referring to Fig. 17, as the connection state of the discharge connector 2B for AC 200V and the vehicle 1 transitions from the unfitted state to the fitted state, then the connected state, the proximity detection signal changes in voltage range from the first range to the third range, then the fourth range.

Subsequently, as the user turns on twice in a row the discharge start switch 252 included in the discharge connector 2B, the point of contact of the normally-off discharge start switch 251 changes from the short state to the open state, the short state, then the open state. On that occasion, the proximity detection signal changes in voltage range from the seventh range to the fourth range, the seventh range, then the fourth range. If such changes are detected in voltage of the proximity detection signal, the ECU 19 controls the on-board inverter 16 so that the on-board inverter 16 begins an output of AC 200V.

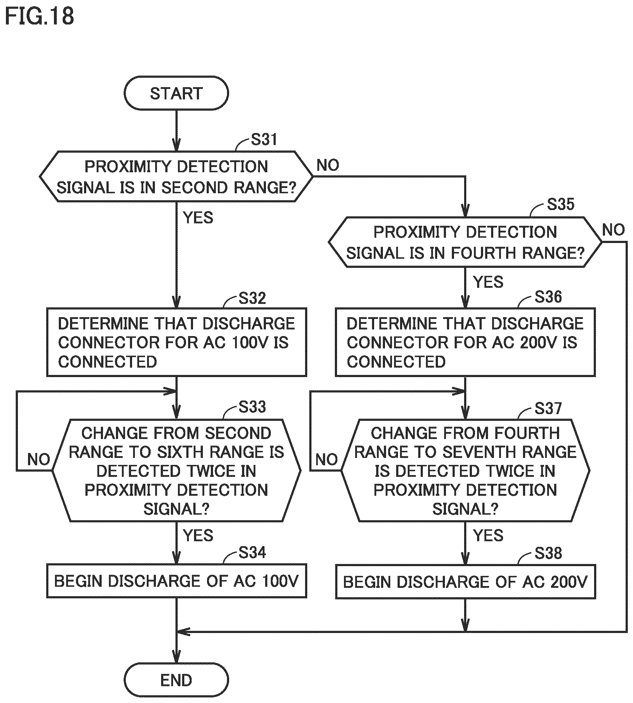

Fig. 18 is a flowchart illustrating a process which is performed by the ECU 19, according to Example 3 of Embodiment 1. In S31, the ECU 19 determines whether the proximity detection signal is in the second range. If the proximity detection signal is in the second range (YES in S31), the ECU 19 determines that the discharge connector 2A for AC 100V is connected to the vehicle inlet 17 (S32).

In S33, the ECU 19 determines whether a user operation is detected twice on the discharge start switch 251. In other words, the ECU 19 determines whether a change from the second range to the sixth range is detected twice in voltage range of the proximity detection signal (see Fig. 16). If such changes over time are detected in proximity detection signal (YES in S33), the ECU 19 controls the on-board inverter 16 so that the on-board inverter 16 begins an output of AC 100V (S34).

In S31, if the proximity detection signal is out of the second range (NO in S31), the ECU 19 proceeds to S35, in which the ECU 19 determines whether the proximity detection signal is in the fourth range. If the proximity detection signal is out of the fourth range (NO in S35), the ECU 19 returns the process to the main routine. If the proximity detection signal is in the fourth range (YES in S35), the ECU 19 determines that the discharge connector 2B for AC 200V is connected to the vehicle inlet 17 (S36).

In S37, the ECU 19 determines whether a user operation is detected twice on the discharge start switch 252. In other words, the ECU 19 determines whether a change from the fourth range to the seventh range is detected twice in voltage range of the proximity detection signal (see Fig. 17). If such changes over time are detected in proximity detection signal (YES in S37), the ECU 19 controls the on-board inverter 16 so that the on-board inverter 16 begins an output of AC 200V (S38).

As described above, even in Example 3, the ECU 19 identifies the type of the discharge connector 2 connected to the vehicle inlet 17, based on the manner of change in voltage of the proximity detection signal in the voltage ranges that are undefined by IEC 61851-1. This allows the ECU 19 to supply the electronic device 3 via the discharge connector 2 with AC power having a voltage that is appropriate for the operation of the electronic device 3. Different manners of changes in voltage of the proximity detection signal result from different resistances of the three resistors included in the discharge connector circuit 23. Thus, according to Example 1, AC power having an appropriate voltage can be supplied in a simple configuration.

In Example 1, the voltage range indicating that a user operation is performed on the discharge start switch 251 and the voltage range indicating that the user operation is performed on the discharge start switch 252 are common (see the fifth range of Fig. 5). Also, in Example 2, the voltage range indicating that no user operation is performed on the discharge start switch 251 and the voltage range indicating that no user operation is performed on the discharge start switch 252 are common (see the fifth range of Fig. 11). However, it is not necessary to share some of the voltage ranges as such. The four possible voltage ranges respectively indicating that: (1) the user operation is performed on the discharge start switch 251; (2) no user operation is performed on the discharge start switch 251; (3) a user operation is performed on the discharge start switch 252; and (4) no user operation is performed on the discharge start switch 252, may be separately defined as described in Example 3. However, some of the voltage ranges being shared enables leaving a wide undefined voltage range for other applications in the future.

### [Variation of Embodiment 1]

Examples 1 to 3 of Embodiment 1 have been described with reference to preparing the discharge connector 2A for AC 100V and the discharge connector 2B for AC 200V, separately. A variation is now described in which the discharge connector can be switched between the AC 100V output power and AC 200V output power.

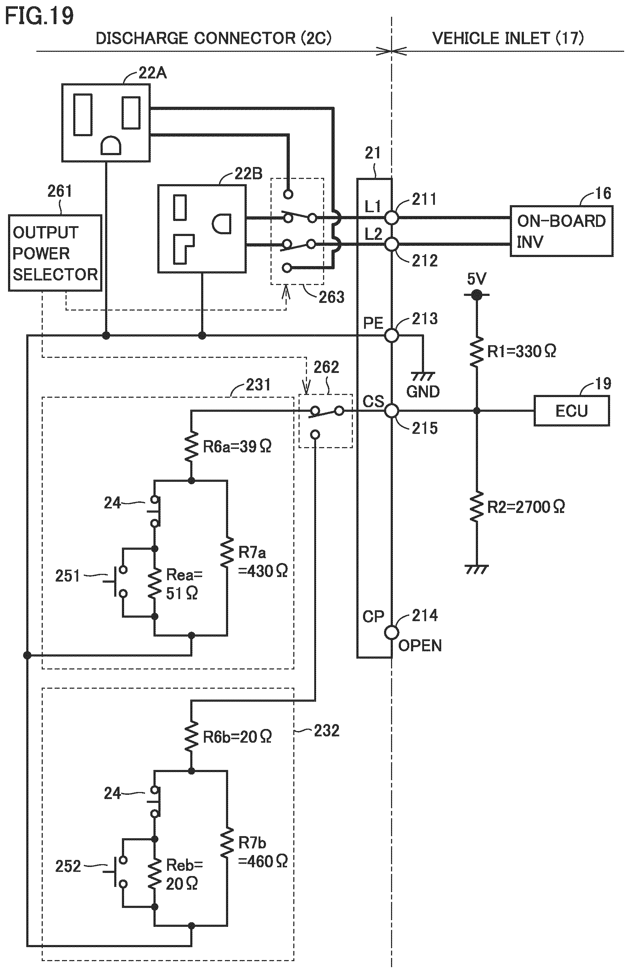

Fig. 19 is a circuit block diagram showing one configuration example of the discharge connector according to a variation of Embodiment 1. A discharge connector 2C includes a power outlet 22A and a discharge connector circuit 231 for AC 100V, a power outlet 22B and a discharge connector circuit 232 for AC 200V, an output power selector 261, a switch 262, and a relay 263. The power outlets 22A and 22B and the discharge connector circuits 231 and 232 are equal in configuration to those shown in Figs. 6 and 7, and the description thereof will thus not be repeated.

The output power selector 261 receives a user operation of selecting the AC 100V output power, and a user operation of selecting the AC 200V output power.

The switch 262 switches the access point of the CS terminal 215 between the discharge connector circuit 231 and the discharge connector circuit 232, in response to a user operation being performed on the output power selector 261. If the AC 100V output power is selected, the switch 262 electrically connects the CS terminal 215 and the discharge connector circuit 231. If the AC 200V output power is selected, in contrast, the switch 262 electrically connects the CS terminal 215 and the discharge connector circuit 232.

The relay 263 switches the access point of the paired AC terminals (the L1 terminal 211 and the L2 terminal 212) between the power outlet 22A and the power outlet 22B, in response to a user operation being performed on the output power selector 261. If the AC 100V output power is selected, the relay 263 electrically connects the paired AC terminals and the power outlet 22A. If the AC 200V output power is selected, in contrast, the relay 263 electrically connects the paired AC terminals and the power outlet 22B.

Even in the variation of Embodiment 1, the changes over time in proximity detection signal can be configured in a manner similar to the time diagrams of Example 1 (see Figs. 8 and 9), for example. Alternatively, the changes over time in proximity detection signal may be configured in a manner similar to the time diagrams of Example 2 (see Figs. 12 and 13) or Example 3 (see Figs. 16 and 17). The process performed by the ECU 19 may also be configured in a manner similar to the one illustrated in the flowchart of Example 1 (see Fig. 10), Example 2 (see Fig. 14), or Example 3 (see Fig. 18), for example, and specific description thereof will thus not be repeated.

Note that the discharge connector circuit 231 corresponds to a "first circuit" according to the present disclosure. The discharge connector circuit 232 corresponds to a "second circuit" according to the present disclosure. The switch 262 corresponds to a "switch" according to the present disclosure.

### [Embodiment 2]

Embodiment 2 will be described with reference to a power supply system performing V2H (Vehicle to Home).

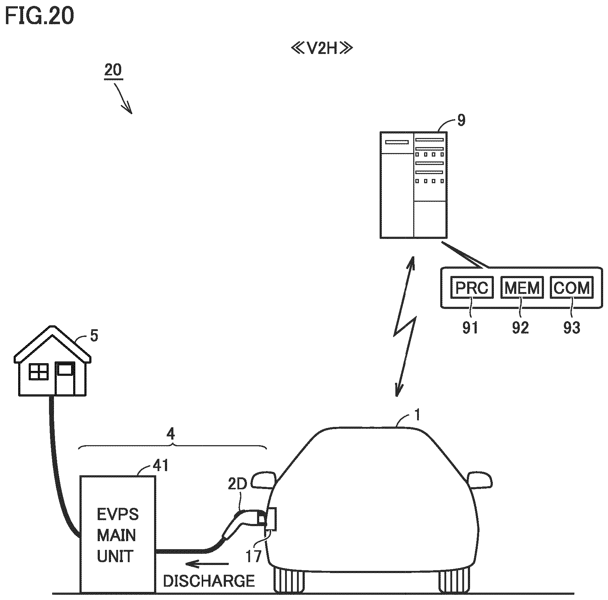

Fig. 20 is a diagram schematically showing an overall configuration of a power supply system according to Embodiment 2. The power supply system 20 includes a vehicle 1, an electric vehicle power system (EVPS) 4, and a server 9.

The vehicle 1 can perform V2H. The vehicle 1 has a configuration which is basically equal to the configuration of the vehicle 1 according to Embodiment 1.

The EVPS 4 is external charging equipment for the vehicle 1, and capable of two-way exchange of electric power with the vehicle 1. The EVPS 4 is capable of charge and discharge of electric power with house wiring 5 of a house or the like. In this example, the electric power charged and discharged between the vehicle 1 and the EVPS 4 has a voltage of AC 100V or AC 200V. However, the voltage may be AC 120V or AC 240V, for example. The EVPS 4 corresponds to "power equipment" according to the present disclosure.

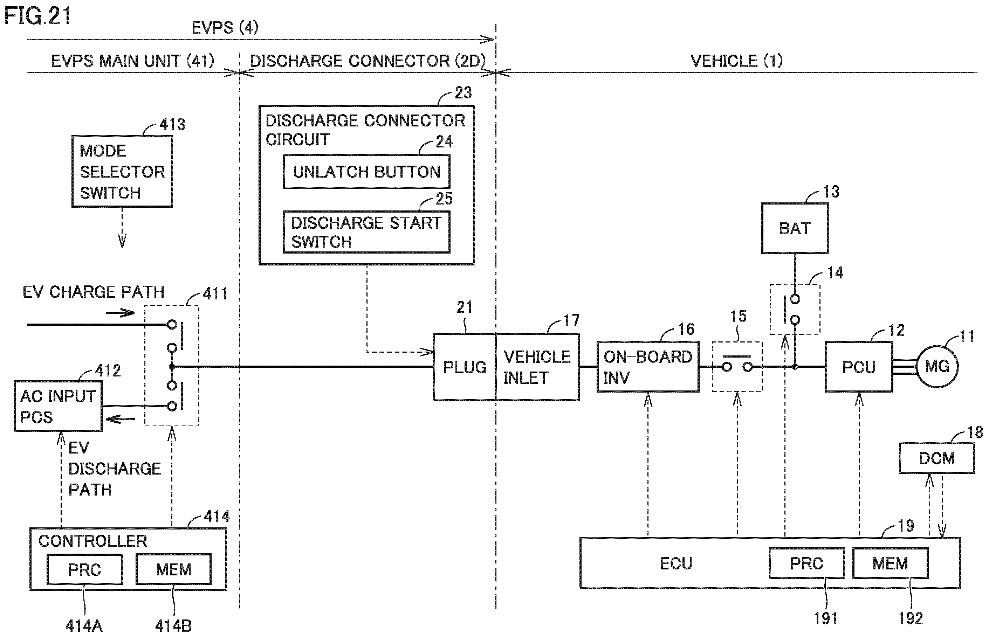

Fig. 21 is a diagram showing a configuration example of the vehicle 1 and the EVPS 4. The EVPS 4 includes a discharge connector 2D and an EVPS main unit 41. The discharge connector 2D basically has the same configuration as any of the discharge connectors 2A to 2C according to Embodiment 1 (see Fig. 6, 7, or 19), except for not including the power outlet 22.

The EVPS main unit 41 includes a relay 411, an AC input power conditioner (PCS: power conditioning system) 412, a mode selector switch 413, and a controller 414.

The relay 411 electrically connects one of an EV charge path and an EV discharge path to a plug 21 of the discharge connector 2D in accordance with commands from the controller 414. If the EV charge path is selected, the relay 411 electrically connects the EV charge path and the plug 21 together, and electrically disconnects the EV discharge path and the plug 21 from each other. If the EV discharge path is selected, the relay 411 electrically connects the EV discharge path and the plug 21 together, and electrically disconnects the EV charge path and the plug 21 from each other.

The AC input power conditioner 412 converts a discharging power, transmitted through the EV discharge path, into grid power, in accordance with commands from the controller 414.

The mode selector switch 413 receives a user operation for selecting one of the functional modes of the EVPS 4. The functional modes of the EVPS 4 include a "charge mode for energy management," a "discharge mode for energy management," and a "self-supporting discharge mode."

The charge mode for energy management is a charge mode in which an electric power or the like is controlled by an energy management function. In the charge mode for energy management, the vehicle 1 is charged according to communications from the EVPS 4 (the controller 414), specifically, a CPLT signal and/or high level communication (HLC). The discharge mode for energy management is a discharge mode in which an electric power or the like is controlled by the energy management function. In the discharge mode for energy management, AC power supplied from the on-board inverter 16 is grid-connected by the EVPS 4, supplying an electric power to the house wiring 5 (a load at a house). Even in the discharge mode for energy management, an electric power is discharged from the vehicle 1 according to the communications from the EVPS 4 (the CPLT signal and HLC). The charge mode for energy management and the discharge mode for energy management will also generally described as a "regular mode."

The self-supporting discharge mode is a discharge mode in which an electric power is directly supplied to a power outlet (not shown) for self-support operation, or directly supplied to a switching device (not shown) for the distribution panel of the house via the AC input power conditioner 412. The self-supporting discharge mode does not require the communications control by the CPLT signal or HLC and the AC power is not ground connected either. The discharge connector 2D is identified based on changes in voltage of the proximity detection signal, if the self-supporting discharge mode is selected, as described later.

The controller 414 includes a processor 414A such as a CPU, a memory 414B such as a ROM and a RAM, and a communication interface (not shown). The controller 414 controls the relay 411 and the AC input power conditioner 412, in accordance with the functional mode selected by the mode selector switch 413. The controller 414 also exchanges the proximity detection signal and/or the CPLT signal with the ECU 19 of the vehicle 1 via the communication interface.

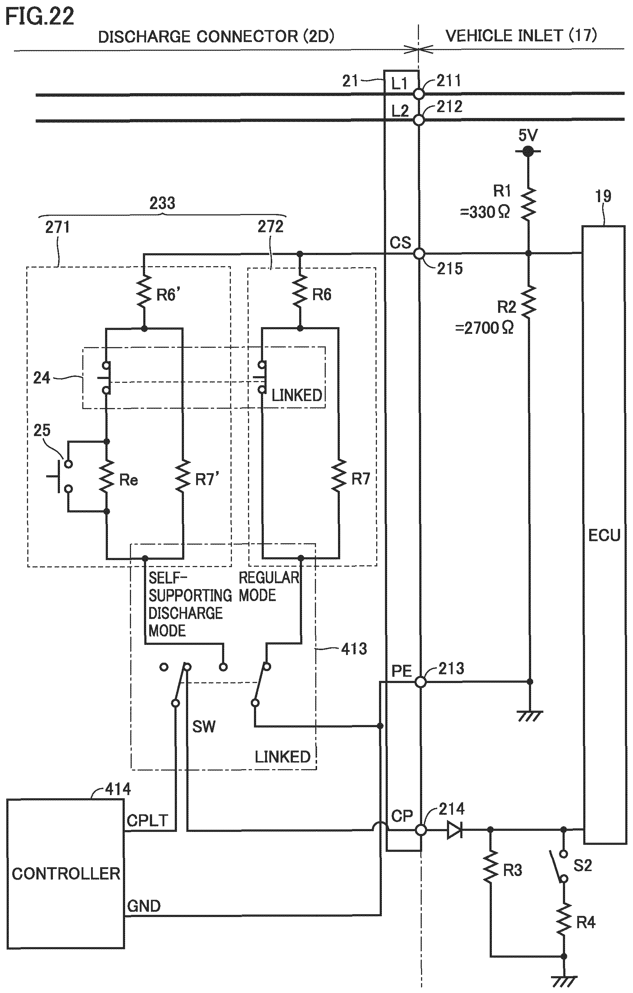

Fig. 22 is a circuit block diagram showing one configuration example of the discharge connector 2D according to Embodiment 2. The discharge connector 2D includes a discharge connector circuit 233. The discharge connector circuit 233 includes a first circuit 271 that is used when the self-supporting discharge mode is selected, and the second circuit 272 that is used when the regular mode is selected.

The first circuit 271 has a circuit structure that is basically equal to the circuit structure of the discharge connector circuit 231 (see Fig. 6) or the discharge connector circuit 232 (see Fig. 7) according to Embodiment 1. Even in Embodiment 2, resistors R6' R7' and Re included in the first circuit 271 are designed to have appropriate resistances, taking into account the voltage ranges undefined by the International Standards IEC 61851-1. This allows the voltage of the proximity detection signal to be adjusted in a manner similar to Examples 1 to 3 of Embodiment 1. As a result, the ECU 19 is allowed to identify whether the discharge connector 2D is for AC 100V or for AC 200V.

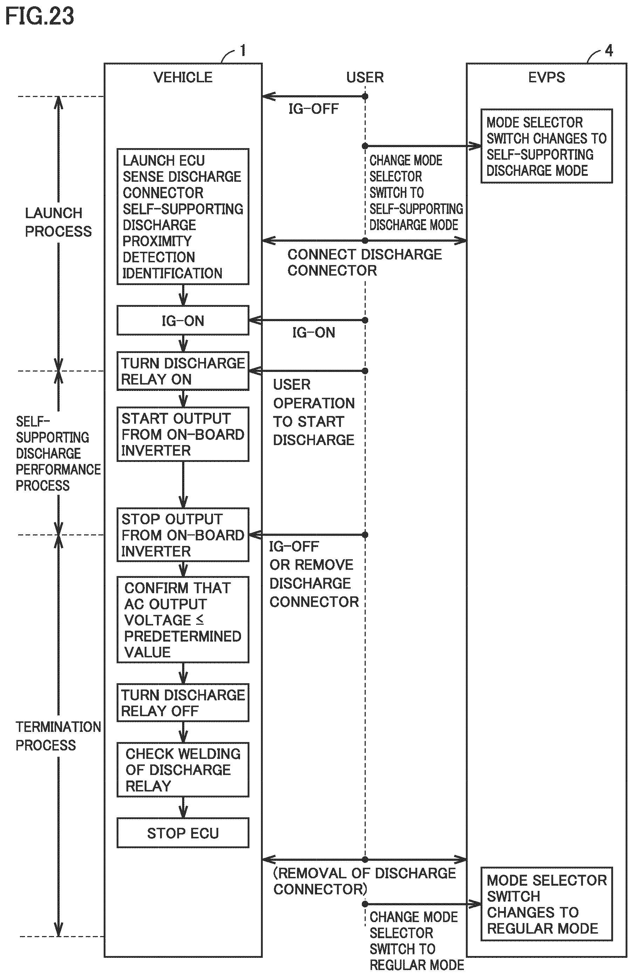

Fig. 23 is a control sequence diagram showing a flowchart of the entirety of a discharge control in V2H. The discharge control according to the present embodiment includes a launch process, a self-supporting discharge performance process, and a termination process.

In the launch process, the user performs an ignition-off (IG-OFF) operation on the vehicle 1. The user further operates the mode selector switch 413, thereby selecting the self-supporting discharge mode, after which the vehicle 1 and the EVPS 4 are connected via the discharge connector 2. Along with the connection of the discharge connector 2 and the vehicle 1, the ECU 19 of the vehicle 1 is launched. The ECU 19 determines the state of connection of the vehicle 1 and the discharge connector 2, based on the proximity detection signal (proximity detection identification). Subsequently, the user performs an ignition-on (IG-ON) operation on the vehicle 1.

In the subsequent self-supporting discharge performance process, the ECU 19 closes the discharge relay 15. The ECU 19 then determines a voltage output to the discharge connector 2, based on the proximity detection signal, and controls the on-board inverter 16 so that the on-board inverter 16 begins a discharge of an electric power to the EVPS 4 via the vehicle inlet 17 and the discharge connector 2. This control is equal to the processes described in Examples 1 to 3 of Embodiment 1 (Fig. 5, and Figs. 8 to 18), and specific description thereof will thus not be repeated. If predetermined conditions are satisfied, the ECU 19 controls the on-board inverter 16 so that the on-board inverter 16 stops the discharge of electric power. The conditions can include that the user performing the IG-OFF operation, the user removing the discharge connector 2 from the vehicle inlet 17, etc.

Finally, in the termination process, the ECU 19 confirms that the voltage output from the on-board inverter 16 has a predetermined value or less, after which the ECU 19 opens the discharge relay 15. The ECU 19 diagnose welding of the discharge relay 15, and thereafter stops its operation.

As described above, even in Embodiment 2, the ECU 19 identifies the type of the discharge connector 2 connected to the vehicle inlet 17, based on the manner of change in voltage of the proximity detection signal in the voltage ranges that are undefined by the International Standards IEC 61851-1, as with Embodiment 1. This allows the ECU 19 to supply the house wiring 5 via the discharge connector 2 with AC power having an appropriate voltage. Different manners of changes in voltage of the proximity detection signal result from different resistances of the discharge connector circuit 23. Thus, according to Embodiment 2, the AC power having an appropriate voltage can be supplied to the vehicle 1 even when the vehicle 1 performs V2H.

Note that, in Embodiment 2, the voltage output to the discharge connector 2 is not limited to be determined by the vehicle 1 based on the proximity detection signal, and may be determined by the EVPS 4. The controller 414 of the EVPS 4 can identify the type of the discharge connector 2, based on changes in voltage of the proximity detection signal, as with the ECU 19 of the vehicle 1. For example, similarly to Example 1 of Embodiment 1, if the proximity detection signal is in the fourth range, the controller 414 of the EVPS 4 can transmit to the vehicle 1 a command for causing the vehicle 1 to discharge AC 100V, and, if the proximity detection signal is in the sixth range, the controller 414 can transmit to the vehicle 1 a command for causing the vehicle 1 to discharge AC 200V. The controller 414 can transmit the above commands to the ECU 19 by using a CPLT signal, for example.

Even in Embodiment 2, the discharge connector can switch between the AC 100V output power and AC 200V output power, as described in the variation of Embodiment 1 (see Fig. 19).

Embodiments 1 and 2 have been described with reference to AC power being supplied from the vehicle 1 or the EVPS 4. However, the power supplied from the vehicle 1 or the EVPS 4 is not limited to AC power, and may be DC power.

The power supply technique according to the present disclosure is applicable not limited to vehicles, and also to any energy storage and management system (ESMS). For example, the power supply technique according to the present disclosure may be applied to mobile, battery-powered power supply apparatuses.

Although the present disclosure has been described and illustrated in detail, it is clearly understood that the same is by way of illustration and example only and is not to be taken by way of limitation, the scope of the present disclosure being interpreted by the terms of the appended claims.

## Claims

1. A vehicle controller (19) for controlling a vehicle (1) capable of externally discharging an electric power via a discharge connector (2),
the vehicle including:
a power converter (16) that adjusts a voltage of an electric power; and
a connector (17) that, as the discharge connector (2) is connected to the connector (17), discharges to the discharge connector (2) an electric power output from the power converter (16),
the connector (17) having
a signal terminal (214) through which a control pilot signal is transmitted; and
an identifying terminal (215) having a voltage level that changes in accordance with a connection state between the discharge connector (2) and the connector (17),
the vehicle controller (19) comprising
a processor (191) that selects a voltage of the electric power output from the power converter (16), wherein
the processor (191):
selects a first voltage when a voltage on the identifying terminal (215) is in a first bound; and
selects a second voltage different from the first voltage when the voltage on the identifying terminal (215) is in a second bound different from the first bound.

2. The vehicle controller (19) according to claim 1, wherein
the discharge connector (2) includes a discharge start switch (25) for receiving a user operation to begin a discharge of the electric power from the connector (17),
the identifying terminal (215) has the voltage level that changes in response to the user operation being performed on the discharge start switch (25), wherein
the processor (191):
controls the power converter (16) so that the power converter (16) begins an output of an electric power having the first voltage, when the voltage on the identifying terminal (215) changes between the first bound and a third bound which is different from the first bound and the second bound; and
controls the power converter (16) so that the power converter (16) begins an output of an electric power having the second voltage, when the voltage on the identifying terminal (215) changes between the second bound and the third bound.

3. The vehicle controller (19) according to claim 2, wherein
the third bound includes a fourth bound and a fifth bound, which do not overlap, wherein
the processor (191):
controls the power converter (16) so that the power converter (16) begins the output of the electric power having the first voltage, when the voltage on the identifying terminal (215) changes between the first bound and the fourth bound; and
controls the power converter (16) so that the power converter (16) begins the output of the electric power having the second voltage, when the voltage on the identifying terminal (215) changes between the second bound and the fifth bound.

4. The vehicle controller (19) according to claim 2 or 3, wherein
the processor (191):
controls the power converter (16) so that the power converter (16) begins the output of the electric power having the first voltage, when a change between the first bound and the third bound is detected multiple times in the voltage on the identifying terminal (215); and
controls the power converter (16) so that the power converter (16) begins the output of the electric power having the second voltage, when a change between the second bound and the third bound is detected multiple times in the voltage on the identifying terminal (215).

5. The vehicle controller according to any one of claims 1 to 4, wherein
the identifying terminal (215) is a CS terminal through which a proximity detection signal, defined by International Electrotechnical Commission (IEC) 61851-1, is transmitted, and
the first bound and the second bound are voltage ranges that are undefined by IEC 61851-1 for the voltage on the CS terminal.

6. The vehicle controller according to any one of claims 1 to 5, wherein the power converter (16) is an on-board inverter, the connector (17) is a vehicle inlet, the signal terminal (214) is a CP terminal, the identifying terminal (215) is a CS terminal through which a proximity detection signal having a voltage level that changes in accordance with a connection state between the discharge connector (2) and the vehicle inlet (17) is transmitted.

7. A vehicle (1), comprising
the vehicle controller (19) according to any one of claims 1 to 6.

8. A power supply system (10) comprising the vehicle (1) according to claim 7 and the discharge connector (2).

9. A discharge connector (2) configured to be connected to a connector (17) provided on a vehicle (1), the discharge connector (2) comprising:
an identifying terminal (215);
a first circuit (271) configured to set a voltage on the identifying terminal (215) to a first bound when the discharge connector (2) is connected to the connector (17);
a second circuit (272) configured to set a voltage on the identifying terminal (215) to a second bound different from the first bound when the discharge connector (2) is connected to the connector (17); and
a switch (SW) configured to selectively connect one of the first circuit (271) and the second circuit (272) to the identifying terminal (215).

10. A power equipment (4) configured to receive power supply from a vehicle (1), the vehicle (1) being configured to adjust a voltage of a power output from a connector (17), the power equipment (4) comprising:
a discharge connector (2D) having a signal terminal (214) through which a control pilot signal is transmitted and an identifying terminal (215), and configured to be connected to the connector (17); and
a controller (414), wherein
a voltage level of the identifying terminal (215) changes in accordance with a connection state between the discharge connector (2) and the connector (17),
the controller (414) is configured to :
send a command to the vehicle (1) to cause the vehicle (1) output an electric power of a first voltage from the connector (17) when a voltage on the identifying terminal (215) is in a first bound; and
send a command to the vehicle (1) to cause the vehicle (1) output an electric power of a second voltage different from the first voltage when the voltage on the identifying terminal (215) is in a second bound different from the first bound.

11. A method for supplying an electric power from a vehicle (1) to outside via a discharge connector (2), wherein
the vehicle (1) includes a connector (17) to which the discharge connector (2) is connected, and adjusts a voltage of an electric power discharged from the connector (17),
the connector (17) has:
a signal terminal (214) through which a control pilot signal is transmitted; and
an identifying terminal (215) having a voltage level that changes in accordance with a connection state between the discharge connector (2) and the connector (17),
the method comprising:
discharging, by the vehicle (1), an electric power having a first voltage from the connector (17), when a voltage on the identifying terminal (215) is in a first bound; and
discharging, by the vehicle (1), an electric power having a second voltage different from the first voltage from the connector (17), when the voltage on the identifying terminal (215) is in a second bound different from the first bound.
